# EUROPEAN PATENT APPLICATION

(11) **EP 2 626 196 A1**
(43) Date of publication of application: **14.08.2013**
(21) Application number: 12154223.7
(22) Date of filing: 07.02.2012
(51) Int. Cl.: B29D 99/00

(54) **Joining of composite shells using a preform**

(71) Applicant: Siemens Aktiengesellschaft, 80333 München (DE)
(72) Inventor: Stege, Jason, 7330 Brande (DK)

(57) **Abstract**

A method for joining a first composite shell (6) and a second composite shell (7) by means of glue (3) is disclosed. It comprises the steps of: fabricating a first and a second mould shells (4,5) with the composite layers with a particular distance to the mould edge (14); placing a preform (8) onto the inner surface (16) of the first composite shell (6) at a position close to the mould edge (14) such that a cavity is formed between the preform (8), part of the inner surface of the first composite shell (16a) adjacent to the mould edge (14); placing the second mould shell (5) with the second composite shell (7) onto the first mould shell (4) such that the mould edge (14) of the first mould shell (4) is facing the mould edge (15) of the second mould shell (5) and such that the preform (8) is facing the inner surface (17) of the second composite shell (7) close to the mould edge (15) such that a cavity is formed between the preform (8), the first composite shell (16a), and the second mould shell (25); and filling glue (3) into the cavity.

## Description

The present invention relates to a method for joining two composite shells, for example two shells of a blade. The method especially relates to joining of two shells of a wind turbine rotor blade at the leading edge of the blade. The present invention further relates to a wind turbine rotor blade.

Up o now two shells, for example of a rotor blade, are typically joined with an overlapping flange glue joint. A traditional way to join two composite shells, for example wind turbine rotor blade shells, involves creating an overlapping flange offset for a glue join. This method requires a special mould for flange and the composite must be packed to curve back on itself. It is also very typical for the composite shells to be trimmed on the leading edge for the pieces to fit together tightly. When the shells are made from epoxy, for safety reasons, the shells need to be post cured before trimming. This traditional process has many steps and is relatively slow.

It is therefore a first objective of the present invention to provide an advantageous method for joining two composite shells, which needs less steps and can be used for untrimmed composite shells. A second objective of the present invention is to provide an advantageous composite element. A third objective of the present invention is to provide an advantageous wind turbine rotor blade.

The fist objective is solved by the method for joining two composite shells, as claimed in claim 1. The second objective is solved by a composite element, as claimed in claim 12 and the third objective is solved by a wind turbine rotor blade as claimed in 14. The depending claims define further developments of the present invention.

The inventive method for joining a first composite shell and a second composite shell by means of glue comprises the following steps:
A number of composite layers are positioned in a first mould shell comprising a mould edge corresponding to a joining portion between the two composite shells. The numbers of composite layers are positioned in the first mould shell with a particular distance to the mould edge. Then, the first composite shell is casted. The first composite shell comprises an inner surface. A number of composite layers are positioned in a second mould shell. The mould shell comprises a mould edge. The mould edge corresponds to a joining portion between the two composite shells. The numbers of composite layers are positioned in the second mould shell with a particular distance to the mould edge. Then, the second composite shell is casted. The second composite shell comprises an inner surface.

A preform is placed onto the inner surface of the first composite shell at a position close to the mould edge such that a cavity is formed between the preform, part of the inner surface of the first composite shell and part of the inner surface of the first mould shell adjacent to the mould edge. The second mould shell with the casted second composite shell is placed onto the first mould shell, for example connected with the first mould shell, such that the mould edge of the first mould shell is facing the mould edge of the second mould shell and such that the preform is facing the inner surface of the second composite shell close to the mould edge such that a cavity is formed between the preform, part of the inner surface of the first composite shell, part of the inner surface of the first mould shell adjacent to the mould edge, part of the inner surface of the second mould shell adjacent to the mould edge and part of the inner surface of the second composite shell. The cavity is filled with glue.

The inventive method has the advantage, that no trimming is required on the edges of the composite shells. No additional flange mould is required, especially in the case of wind turbine rotor blade shells. Moreover, the difficult task of packing of the flange mould is not required. Furthermore, the obtained glue join is designed to minimize cracks with feathered or tapered shells. Furthermore, the strength of the connection is due to the fibre pre-form allowing a less structural glue to be used with better corrosion properties at the joined portion, for example at the leading edge of a blade. Furthermore, the inventive method can be fast and simply performed and contains fewer steps compared with traditional methods.

Generally, the glue can be filled or inserted into the cavity before or after connecting the two composite shells and/or mould shells with each other or placing the two composite shells and/or mould shells onto each other.

Preferably, the composite shells are shells of a blade, for example a wind turbine rotor blade. In this case, the joining edge may be the leading edge of the blade. Advantageously a composite preform can be used. For example, the composite preform may be a so-called pre-preg preform. The preform can be hardened or cured, for example freezed, before placing it onto the inner surface of the first composite shell.

The inventive method quickly provides a strong fibre reinforced join between the two shells in a way that is very unlikely to form cracks. The process and the resulting structure also allows for a wider variety of glue to be used with the potential for better joining edge, for example leading edge, erosion performance.

Advantageously the two shells are cast with the composite layers feathered as they approach the leading edge and never over the edge of the mould. This means the shells can remain in the casting mould and do not need to be removed for trimming and reinserted. The difficult flange structure does not exist. This makes it simpler to pack the mould.

The composite preform can be manufactured comprising the step of laying the composite forming the preform onto the surface of a model form or a positive mould of part of the joined composite shells including the joining edge. In case of a wind turbine rotor blade, a positive mould of the leading edge can be made. A surface treatment or release film can be applied before laying composite material, for example pre-preg composite, over the positive form. This is much simpler than placing pre-preg composite in any type of concave mould. The packed mould or mould sections can then be placed in a freezer until frozen. For example, the model form with the composite preform on it can be placed into a freezer.

The frozen composite preform can be separated or detached from the model form or positive mould. Then, the frozen composite preform can be placed onto the inner surface of the first composite shell. This has the advantage, that the frozen perform or pre-preg preform can be easily de-moulded and handled. It can be placed in the proper position in the first mould shell, which may be the bottom shell mould, along with glue to fill the joining edge or leading edge.

The shape of the preform may preferably be larger, for instance slightly larger, than the corresponding inner shape or inner contour of the cavity between the first composite shell and the second composite shell close to the joining edge. In this case, because of the slightly larger shape of the pre-form than the interior surface, the preform will be pressed against the inner surface of the second composite shell, which may be the composite shell in an upper mould, when the two mould shells are closed. In other words, the shape of the preform is advantageously dimensioned such that the preform is pressed against the inner surface of the second shell when the second mould shell is placed onto the first mould shell or connected with the first mould shell, or when the mould shell assembly of the two mould shells is closed. Furthermore, pressure may be applied to the preform for pressing it against the inner surfaces of the first and second composite shells. For example, pressure may be applied by means of an expanding form, for example epoxy foam, and/or a pressure bag and/or a vacuum bag.

Heat can be applied to the preform for at least partly melting the preform and bonding it with the first and second composite shell. The even pressure ensures that the resulting fibre bond is a smooth arc between the two shells and the excess glue is pressed out of the mould. Moreover, the preform can be cured. By curing the preform a tight bond between the preform and both shells is obtained. The feathered or tapered edge of the two shells joined by glue is highly resistant to cracking.

The resulting fibre reinforced structure decreases the structural requirements of the glue used, opening up potential for better leading edge erosion performance or more generally for better joining edge erosion performance. A more flexible glue on the joining edge or leading edge leads to better erosion performance than a glass fibre surface. With the inventive method, a larger surface area of the joining edge or leading edge glue joint can be exposed without affecting the composite structure. This can create an erosion resistant stripe on the surface of, for example the leading edge, in the most vulnerable place for surface erosion, for example of a wind turbine rotor blade.

The inventive composite element is manufactured according to the previously described method. It has the same advantages as previously described. The composite element may for example be a wind turbine rotor blade. In this case, a high erosion resistance can be achieved at the leading edge.

The inventive wind turbine rotor blade comprises a first shell, a second shell, an outer surface, an inner surface and a leading edge. The outer surface at the leading edge is formed by a cured glue material. The inner surface at the leading edge is formed by a preform element, for example a composite perform element, which is connected to the first shell and to the second shell. The preform element may for example be a composite preform. The composite preform may have the same properties as the composite preform as described in conjunction with the inventive method.

Further features, properties and advantages of the present invention will become clear from the following description of an embodiment in conjunction with the accompanying drawings. The embodiment does not limit the scope of the present invention which is determined by the appended claims. All described features are advantageous as separate features or in any combination with each other.
- Figure 1: schematically shows a rotor blade in a plan view on the plane defined by the blade's span and the blade's chord.
- Figure 2: schematically shows a chord-wise cross section through the rotor blade's airfoil section.
- Figure 3: schematically shows a conventional method of joining two shells of a wind turbine rotor blade with an overlapping flange glue joint.
- Figure 4: schematically shows the inventive method of joining two composite shells of a wind turbine rotor blade.
- Figure 5: schematically shows the manufacturing of the pre-form in a sectional view.

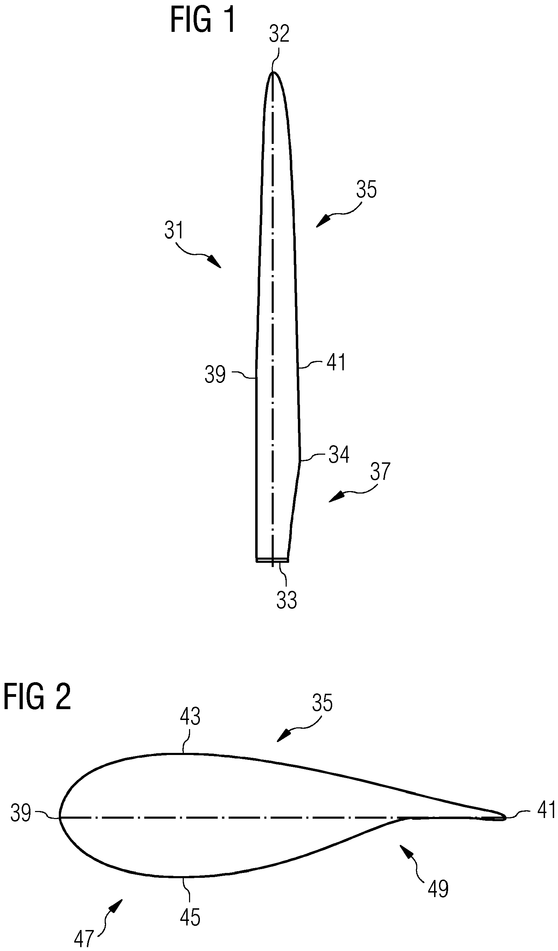

An embodiment of the present invention will now be described with reference to figures 1 to 5.

Figure 1 shows a wind turbine blade 31 as it is usually used in a three-blade rotor. The rotor blade 31 shown in Figure 1 comprises a root portion 33 with a cylindrical profile and a tip 32. The tip 32 forms the outermost part of the blade 31. The cylindrical profile of the root portion 33 serves to fix the blade 31 to a bearing of a rotor hub. The rotor blade 31 further comprises a so-called shoulder 34 which is defined as the location of its maximum profile depth, i.e. the maximum chord length of the blade. Between the shoulder 34 and the tip 32 an airfoil portion 35 extends which has an aerodynamically shaped profile. Between the shoulder 34 and the cylindrical root portion 33, a transition portion 37 extends in which a transition takes place from the aerodynamic profile of the airfoil portion 35 to the cylindrical profile of the root portion 33.

A chord-wise cross section through the rotor blade's airfoil section 35 is shown in Figure 2. Their aerodynamic profile shown in Figure 2 comprises a convex suction side 43 and a less convex pressure side 45. The dash-dotted line extending from the blade's leading edge 39 to its trailing edge 41 shows the chord of the profile. Although the pressure side 45 comprises a convex section 47 and a concave section 49 in Figure 2, it may also be implemented without a concave section at all as long as the suction side 43 is more convex than the pressure side 45.

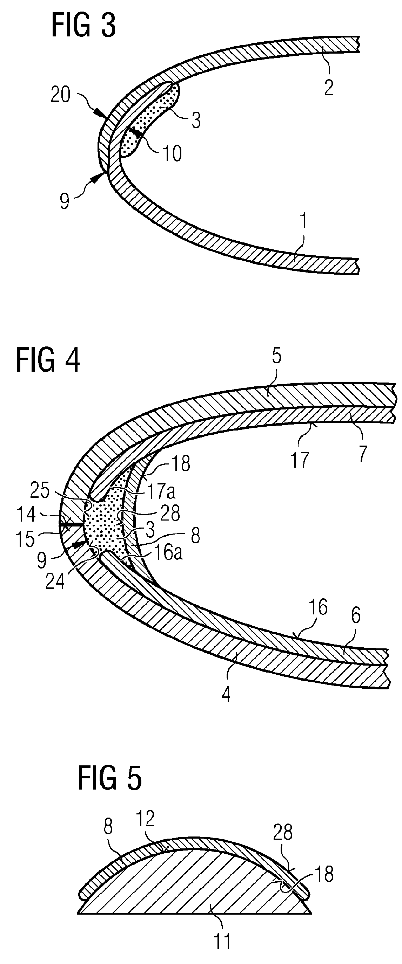

A conventional method of joining two shells of a wind turbine rotor blade with an overlapping flange glue joint will now be described with reference to Figure 3. Figure 3 schematically shows part of two shells of a wind turbine rotor blade, which are connected with each other by means of an overlapping flange glue joint in a sectional view. The connection at the leading edge 9 of the rotor blade shells is shown. The first shell or lower shell 1 comprises a portion 10 forming an overlapping flange. The second shell or upper shell 2 comprises a portion 20, which forms a flange and overlaps the portion 10 of the first shell 1. The portion 10 and the portion 20 are glued onto each other by means of glue 3 and create an overlapping glue join flange.

To manufacture such an overlapping flange a special mould for the flange is required and the composite must be packed to curve back on itself. Furthermore, the composite shells 1 and 2 have to be trimmed on the leading edge 9 for fitting together tightly. When the shells 1 and 2 are made from epoxy, for safety reasons, the shells need to be post cured before trimming.

The invention will now described with reference to Figures 4 and 5. Figure 4 schematically shows a sectional view of two mould shells with two composite shells connected with each other by means of a preform and glue. First, a first composite shell 6 was casted in a first mould shell 4. A second composite shell 7 was casted in a second mould shell 5. The first mould shell 4 comprises a joining edge 14. The mould shell 5 also comprises a joining edge 15. The joining edges 14 and 15 correspond to the leading edge 9 of the wind turbine rotor blade which will be manufactured.

Before casting the composite shells 6 and 7 composite material was placed in the respective mould shell 4 or 5 such that the composite layers are spaced from the respective mould edge 14 or 15. This means, that the composite layers do not reach the mould edge 14 or 15 of the corresponding mould shell 4 or 5.

Before closing the assembly of the first mould shell 4 and the second mould shell 5, a composite preform 8 was placed onto the inner surface 16 of the first composite shell 6 close to the leading edge 9 or the joining edge 14. The pre-form 8 was placed onto the inner surface 16 of the first composite shell 6 such that a cavity is formed between part of the inner surface 16a of the first composite shell 6, part of the inner surface 24 of the first mould shell and the preform 8, more precisely the outer surface 28 of the preform 8. The obtained cavity is in Figure 2 filled with glue 3.

Then the second mould shell 5 with the second composite shell 7 laying on the inner surface of the second mould shell 5 is placed onto the first mould shell 4. The first mould shell 4 and the second mould shell 5 are placed onto each other or connected to each other such that, the joining edge 14 of the first mould shell is facing the joining edge 15 of the second mould shell 5. The second composite shell 7 comprises an inner surface 17. The composite preform 8 is pressed against the inner surface 17 of the second composite shell 7 and positioned at the inner surface 17 such that a cavity filled with glue 3 is formed between the outer surface 28 of the preform 8, part of the inner surface 17a of the second composite shell close to the joining edge 15 of the second mould shell, part of the inner surface 25 of the second mould shell 5 close or adjacent to the joining edge 15, part of the inner surface 24 of the first mould shell 4 close or adjacent to the joining edge 14 of the first mould shell 4 and part of the inner surface 16a of the first composite shell 6.

As it can be seen from Figure 4, when detaching the first mould shell 4 and the second mould shell 5, the manufactured wind turbine rotor blade comprises a leading edge 9, which has an outer surface formed by glue 3 and an inner surface 18, which is formed by the inner surface 18 of the preform 8. The inventive method provides a simple and reliable connection between the two composite shells 6 and 7 and provides a high flexibility and possible variety for the used glue material. Along the leading edge 9 a stripe of erosion resistant material, formed by the used glue 3, can be created.

The inventive method provides a strong fibre reinforced join between the two shells in a way that is very unlikely to form cracks. The two composite shells 6 and 7 can be cast with composite layers feathered as they approach the joining edge 14 or 15 of the respective mould 4 or 5 and never over the respective edge 14 or 15 of the mould 4 or 5. This means, that as a variant of the example shown in Figure 2, the composite layers of the composite shells 6 and/or 7 can reach up to the joining edges 14 or 15.

The composite shells 6 and 7 can remain in the casting moulds 4 and 5 and do not need to be removed for trimming and reinserted.

The manufacturing of the preform 8 will now be described with reference to Figure 5. Figure 5 schematically shows a sectional view of the composite preform 8 and a positive form 11 of the leading portion of the rotor blade which will be manufactured. The positive mould or positive form or model form 11 of the leading edge 9 of the rotor blade comprises an outer surface 12. A surface treatment may be applied. Additionally or alternatively, a release film can be positioned onto the outer surface 12 of the model form 11. Composite material, for example pre-impregnated fibre layers forming the preform are laid onto the outer surface 12 of the model form 11. The packed positive mould or model form 11 is then placed in a freezer until the preform 8 is frozen.

The frozen preform can then be easily detached from the model form 11 and handled. For connecting the two composite shells 6 and 7 the preform 8 is placed in the proper position in the first or bottom composite shell 6 along with glue 3 to fill the leading edge portion 9. Preferably, the shape of the pre-form 8 is slightly larger than the interior surface of the leading edge portion of the rotor blade. Due to the slightly larger shape the preform will be pressed against the second or upper composite shell 7 in the upper or second mould shell 5 when the two mould shells 4 and 5 are closed.

An expanding form, pressure bag, or vacuum bag applies pressure to the preform 8 against the two shells 6 and 7. Heat can be applied for simply present in the case of epoxy foam, causing the pre-preg preform to melt and bond with the two shells 6 and 7. The even pressure ensures that the resulting fibre bond is a smooth arc between the two shells 6 and 7 and the excess glue 3 is pressed out of the mould.

The pre-preg preform is now cured and tightly bonded to both shells 6 and 7. The feathered or tapered edges of the two shells 6 and 7 joined by glue create a leading edge 9 which is highly resistant to cracking. The resulting fibre reinforced structure decreases the structural requirements of the used glue 3 and opens up potential for better leading edge erosion performance.

## Claims

1. A method for joining a first composite shell (6) and a second composite shell (7) by means of glue (3), comprising the steps of:
- positioning a number of composite layers in a first mould shell (4) comprising a mould edge (14) corresponding to a joining portion between the two composite shells (6, 7), wherein the number of composite layers are positioned in the first mould shell (4) with a particular distance to the mould edge (14),
- casting the first composite shell (6) comprising an inner surface (16),
- positioning a number of composite layers in a second mould shell (5) comprising a mould edge (15) corresponding to a joining portion between the two composite shells (6, 7), wherein the number of composite layers are positioned in the second mould shell (5) with a particular distance to the mould edge (15),
- casting the second composite shell (7) comprising an inner surface (17),
- placing a preform (8) onto the inner surface (16) of the first composite shell (6) at a position close to the mould edge (14) such that a cavity is formed between the perform (8), part of the inner surface of the first composite shell (16a) and part of the inner surface of the first mould shell (24) adjacent to the mould edge (14),
- placing the second mould shell (5) with the casted second composite shell (7) onto the first mould shell (4) such that the mould edge (14) of the first mould shell (4) is facing the mould edge (15) of the second mould shell (5) and such that the preform (8) is facing the inner surface (17) of the second composite shell (7) close to the mould edge (15) such that a cavity is formed between the perform (8), part of the inner surface of the first composite shell (16a), part of the inner surface of the first mould shell (24) adjacent to the mould edge (14), part of the inner surface of the second mould shell (25) adjacent to the mould edge (15) and part of the inner surface of the second composite shell (17a), and
- filling glue (3) into the cavity.

2. The method as claimed in claim 1,
**characterised in that**
the composite shells (1, 2) are shells of a blade (31).

3. The method as claimed in claim 2,
**characterised in**
using a composite preform.

4. The method as claimed in any of the claims 1 to 3, **characterised in**
hardening the preform (8) before placing it onto the inner surface (16) of the first composite shell (1).

5. The method as claimed in claim 4,
**characterised in**
freezing the perform (8).

6. The method as claimed in claim 3 in conjunction with any of the claims 1 to 5,
**characterised in**
manufacturing the composite preform (8) comprising the step of laying the composite forming the preform onto the surface (12) of a model form or positive mould (11) of part of the joined composite shells (1, 2) including the joining edge (14, 15).

7. The method as claimed in claim 5 or claim 6, **characterised in**
detaching the frozen composite preform (8) from the model form or positive mould (11), and placing the frozen composite preform (8) onto the inner surface (16) of the first composite shell (1).

8. The method as claimed in any of the claims 1 to 7,
**characterised in**
dimensioning the shape of the preform (8) larger than the corresponding inner shape or inner contour of the cavitiy between the first shell (1) and the second shell (2) close to the joining edge (14, 15).

9. The method as claimed in any of the claims 1 to 8,
**characterised in**
applying pressure to the preform (8) for pressing it against the inner surfaces (16, 17) of the first (1) and second composite shells (2).

10. The method as claimed in claim 9,
**characterised in**
applying pressure by means of an expanding foam and/or a pressure bag and/or a vacuum bag.

11. The method as claimed in any of the claims 1 to 10,
**characterised in**
applying heat to the preform (8) for at least partly melting the preform (8) and bonding it with the first (1) and second composite shell (2).

12. A composite element manufactured according to the method
as claimed in any of the claims 1 to 11.

13. The composite element as claimed in claim 12,
**characterised in that**
the composite element is a wind turbine rotor blade (31).

14. A wind turbine rotor blade (31) comprising a first shell (1), a second shell (2), an outer surface, an inner surface and a leading edge (9),
**characterised in that**
the outer surface at the leading edge (9) is formed by a cured glue material (3) and the inner surface at the leading edge (9) is formed by a preform element (8) which is connected to the first shell (1) and to the second shell (2).

15. The wind turbine rotor blade (31) as claimed in claim 14,
**characterised in that**
the inner surface (18) at the leading edge (9) is formed by a composite preform element (8).
